Europäisches Patentamt

European Patent Office

Office européen des brevets

(11) Veröffentlichungsnummer: **0 242 718 B1**

## (12) EUROPÄISCHE PATENTSCHRIFT

(45) Veröffentlichungstag der Patentschrift: **04.03.92**

(21) Anmeldenummer: **87105255.1**

(22) Anmeldetag: **09.04.87**

(51) Int. Cl.⁵: **A01D 43/10**, A01D 41/12, B02C 9/02

(54) Fördervorrichtung zwischen einer Zuführeinheit und einem Austragschacht.

(30) Priorität: **25.04.86 US 855658**

(43) Veröffentlichungstag der Anmeldung: **28.10.87 Patentblatt 87/44**

(45) Bekanntmachung des Hinweises auf die Patenterteilung: **04.03.92 Patentblatt 92/10**

(84) Benannte Vertragsstaaten: **DE FR GB IT NL**

(56) Entgegenhaltungen:
CH-A- 641 928          DD-A- 207 838
DE-A- 3 313 673       DE-C- 683 475
FR-A- 2 536 242        US-A- 3 515 258
US-A- 4 059 233

(73) Patentinhaber: **DEERE & COMPANY**
**1 John Deere Road**
**Moline, Illinois 61265(US)**

(72) Erfinder: **Russ, Roger Allen**
**439 East Rochester**
**Ottumwa Iowa 52501(US)**
Erfinder: **Hennen, John Joseph**
**171 Northview Avenue**
**Ottumwa Iowa 52501(US)**

(74) Vertreter: **Feldmann, Bernhard et al**
**DEERE & COMPANY European Office, Patent Department Steubenstrasse 36-42 Postfach 503**
**W-6800 Mannheim 1(DE)**

## Beschreibung

Die Erfindung betrifft eine Fördervorrichtung zwischen einer Zuführeinheit und einem Austragschacht, bestehend aus einer Fördertrommel und einem teilzylindrischen Gehäuse, wobei die Fördertrommel eine Welle und Förderpaddel aufweist und das Gehäuse zum tangentialen Zu- und Abführen des Förderguts ausgebildet ist.

Fördervorrichtungen werden für die vielfältigsten Zwecke benutzt. Beispielsweise werden Schüttgüter wie Getreide oder faserige Güter wie Stroh oder Heu in Gebäuden und Silos mittels Förderrädern oder Gebläsen befördert. Auch bei Feldhäckslern, sowohl bei selbstfahrenden als auch bei gezogenen oder angebauten, wird das geerntete Gut, meist ist es Mais, Sorghum, Getreide oder Gras, mittels eines Gebläses von einer Häckseltrommel angenommen und einem Auswurfkrümmer oder Auswurfturm zugeführt, von wo aus es auf ein Begleitfahrzeug geblasen wird.

So geht aus der US-A-4 059 233 ein Feldhäcksler mit einem Schaufelrad und einer Häckseltrommel hervor, die derart zusammenarbeiten, daß das von der Häckseltrommel zerkleinerte Erntegut dem Schaufelrad tangential zugeführt und von letzterem durch einen Auswurfschacht auf ein Begleitfahrzeug geworfen wird. Das Schaufelrad weist vier Paddel oder Schaufeln auf, die über einen Rahmen starr an einer Welle des Schaufelrades befestigt sind.

Bei dieser Fördervorrichtung ist zu erwarten, daß infolge plötzlich auftretender Vergrößerungen der Zuführmenge Verstopfungen auftreten; zumindest aber, daß im Moment ein hoher Drehmomentbedarf entsteht, der nur durch eine genügend hohe Drehmomentreserve der Antriebsmaschine gedeckt werden kann.

Es ist zwar seit langem bekannt, bei Schlegelhäckslern Ernteschlegel pendelnd aufzuhängen; diese Aufhängung ist aber gewählt, um auf dem Boden liegenden Hindernissen nachgeben zu können, und hat mit der Förderfunktion nichts zu tun.

Aus der US-A-3 515 258 ist zudem ein Gebläse mit schwenkbeweglich aufgehängten Paddeln bekannt. Die Zuführung des Förderguts erfolgt dort aber axial, so daß insofern die Förderprinzipien und die Förderprobleme nicht gleichzusetzen sind.

Die Ausführungen der Gebläseräder sowohl nach der US-A-4,059,233 als auch nach der US-A-3,515,258 weisen als einen weiteren Nachteil auf, daß es im Gebläseradraum zu Turbulenzen mit umherwirbelndem Fördergut kommen kann, die ebenfalls zu einem erhöhten Energiebedarf führen, der sich dem Energiebedarf bei Drehmomentspitzen hinzuaddiert und sich ungünstig auswirkt.

Die der Erfindung zugrunde liegende Aufgabe wird darin gesehen, eine Fördervorrichtung, und zwar insbesondere für einen Feldhäcksler, zu schaffen, die Fördergut tangential von einer Zuführeinheit abnimmt und es tangential einem Austragschacht zuführt, wobei Drehmomentbedarfsspitzen und Verstopfungen vermieden, eine leichte Demontierbarkeit der Förderpaddel ermöglicht und eine einfache Bauweise verwendet werden sollen.

Diese Aufgabe ist durch die erfindungsgemäße Lehre gemäß Patentanspruch 1 gelöst worden, wobei diese Lehre durch die in den weiteren Patentansprüchen enthaltenen Merkmale vorteilhaft weiterentwickelt worden ist.

Auf diese Weise kann sich die Mantelfläche der Fördertrommel, die im Förderbetrieb von den schwenkbeweglich aufgehängten Förderpaddeln gebildet wird, der Dicke der Fördergutmatte anpassen und guetscht diese nicht zwischen dem Förderpaddel und dem teilzylindrischen Gehäuse ein, es werden also Verstopfungen unterbunden.

Die Herstellung und Befestigung mehrerer starr auf der Welle befestigter Bleche ist mit geringerem Aufwand zu erreichen als die eines einzigen evtl. aus Guß zu bildenden dicken Trägers, wie dies in der US-A-3,515,258 gezeigt ist. Bei breiteren Fördertrommeln läßt sich die Zahl der untereinander gleichen Tragbleche entsprechend erhöhen und somit die auf die Stangen wirkende Zentrifugalkraft aufnehmen. Infolge des einheitlichen Außendurchmessers der Stangen - sieht man von den Umfangsnuten zum Halten der Riegel ab - ist es möglich, die Stangen zu jeder Seite zu bewegen und die jeweils axial außen angelenkten Förderpaddel ohne Demontage weiterer Förderpaddel zu entfernen. Die Aufhängung der Förderpaddel derart, daß sie auf der Welle frei pendeln können, läßt beim Auftreffen auf unterschiedlich dicke Fördergutschichten ein Ausweichen der behinderten Förderpaddel in einem größtmöglichen Maß zu. Selbst beim Verstopfen der Fördervorrichtung könnte die Fördertrommel noch weiterdrehen, wobei die Förderpaddel mit ihrer nacheilenden Fläche lediglich an der Welle anliegen würden. Angesichts der vielfachen Möglichkeiten der Beschädigung der Fördertrommel, insbesondere aufgrund von Fremdkörpern im Fördergut, ist es vorteilhaft, wenn die Förderpaddel lediglich durch das Herausziehen der betreffenden Stange gelöst und ausgetauscht werden können.

Der Nachteil der Bildung von Turbulenzen in dem Gebläseradraum wird dadurch beseitigt, daß in der Fördertrommel die primär zur Erhöhung der Stabilität vorgesehenen und aus einfachen Bauteilen bestehenden Versteifungselemente so angeordnet werden, daß sie den Freiraum zwischen den Förderpaddeln und der Welle verschließen, so daß sich dort keine Turbulenzen bilden können.

Die in den Unteransprüchen genannten Merkmale gewährleisten eine einfache Wartung, da die Stangen leicht entnehmbar und die Paddelplatten leicht einstellbar sind. Insbesondere die genaue Einstellung der Paddelplatten bewirkt, daß der Abstand zwischen deren Außenkanten und der Innenwandung des teilzylindrischen Gehäuses so klein wie möglich wird, so daß sich dazwischen kein Fördergut einzwängen kann.

Je nach den kräftemäßigen Anforderungen an die Fördervorrichtung kann die Fördertrommel versteift werden, damit es aufgrund von hohen Materialströmen nicht zu Unwuchten kommt.

In der Zeichnung ist ein nachfolgend näher beschriebenes Ausführungsbeispiel der Erfindung dargestellt. Es zeigt:

Fig. 1    einen die erfindungsgemäße Fördervorrichtung enthaltenden Feldhäcksler in Seitenansicht,

Fig. 2    die Fördervorrichtung in Seitenansicht und in übersichtlicher Darstellung,

Fig. 3    die Fördervorrichtung aus Figur 2 in Draufsicht,

Fig. 4    eine Fördertrommel der Fördervorrichtung in detaillierter Darstellung im Schnitt entlang der Linie 4-4 in Figur 5 und in Blickrichtung der dazugehörigen Pfeile,

Fig. 5    die Fördertrommel aus Figur 4 in Draufsicht und um 90 Grad gedreht,

Fig. 6    die Fördervorrichtung in Seitenansicht mit der Zuordnung zu einem Körnerprozessor und

Fig. 7    die Fördervorrichtung in Seitenansicht mit der Zuordnung zu einem Nachschneidesieb und einem Zwischenförderer.

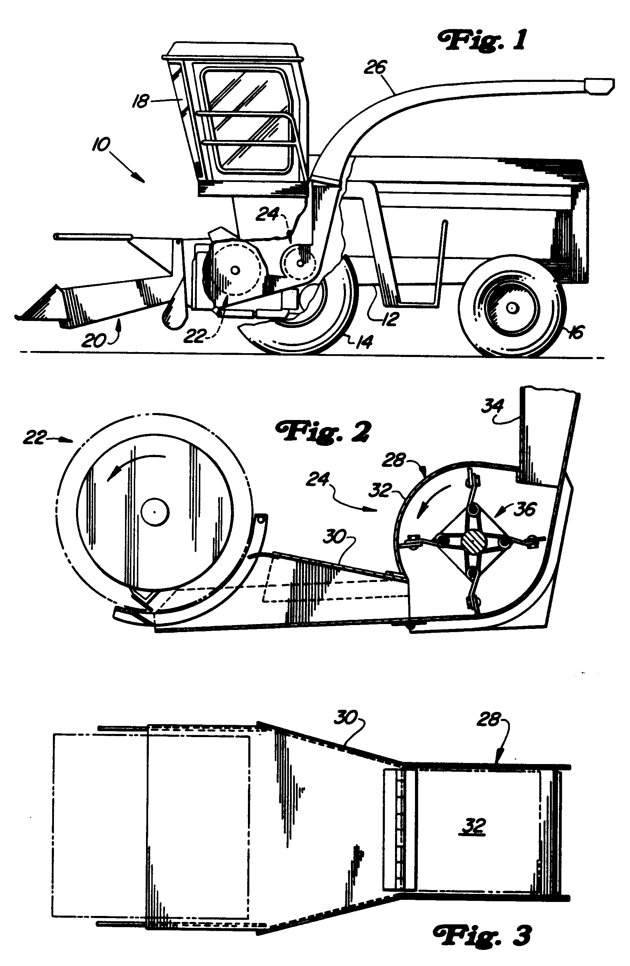

Ein in Figur 1 gezeigter selbstfahrender Feldhäcksler 10 enthält einen Hauptrahmen 12, der auf vorderen und rückwärtigen Rädern 14 und 16 getragen wird, wobei jeweils nur eines von einem Paar Räder 14, 16 zu sehen ist. Vorne und oben ist auf den Hauptrahmen 12 eine Fahrerkabine 18 aufgesetzt, in der sämtliche nicht gezeigte Bedienungseinrichtungen des Feldhäckslers 10 untergebracht sind. An den vorderen Endbereich des Hauptrahmens 12 ist ein Maisgebiß 20 montiert, mit dem Erntegüter wie Mais, Sorghum oder dergleichen vom Boden getrennt werden können, die dann einer mit nicht gezeigten Messern bestückten und von einer Häckseltrommel gebildeten Zuführreinheit 22 zur Zerkleinerung aufgegeben werden. Das geschnittene Ernte- bzw. Fördergut wird dann von der Zuführreinheit 22 nach hinten, und zwar ausgehend von der Vorwärtsfahrtrichtung des Feldhäckslers 10, einer erfindungsgemäßen Fördervorrichtung 24 zugeleitet, die selbst wiederum das geschnittene Fördergut nach oben in einen sich rückwärtig erstreckenden Austragschacht 26 wirft, innerhalb dessen es infolge eines von der Fördervorrichtung 24 erzeugten Luftstromes befördert wird.

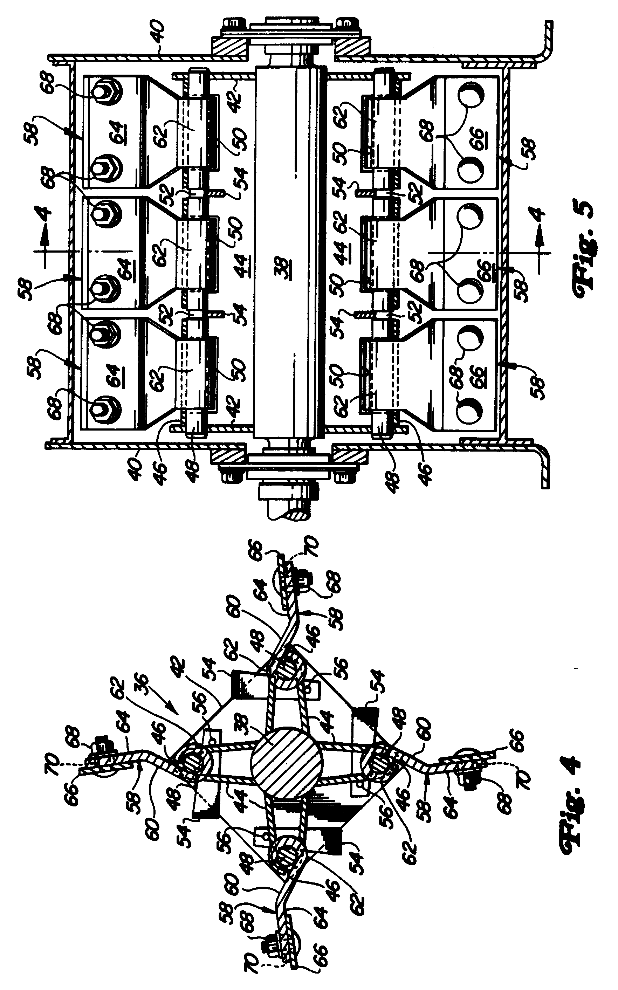

Die in den Figuren 2 bis 5 in vielen Einzelheiten gezeigte Fördervorrichtung 24 enthält ein teilzylindrisches Gehäuse 28 mit einem Einlaßbereich 30, der sich mit Blick auf die Figuren 1 und 2 rückwärtig und nach oben von einem unteren rechten Quadranten der Zuführreinheit 22 bis zu einem unteren oder Bodenquadranten eines Zylinderabschnitts 32 des Gehäuses 28 und einem Auslaßbereich 34 erstreckt, der zwischen einem oberen rückwärtigen Quadranten des Zylinderabschnitts 32 und einem Eingang in den Austragschacht 26 verläuft. Innerhalb des Zylinderabschnitts 32 des Gehäuses 28 ist eine Fördertrommel 36 untergebracht, die eine sich quer zur Förderrichtung erstreckende und in sich gegenüberliegenden Wänden 40 des Zylinderabschnitts 32 gelagerte Welle 38 enthält. Ein Paar im wesentlichen quadratischer Tragbleche 42 ist an entsprechenden Stellen nahe der Innenflächen der Wände 40 auf der Welle 38 zentriert und befestigt. Die jeweiligen Eckbereiche der Tragbleche 42 sind axial, und zwar in bezug auf die Welle 38, aneinander ausgerichtet. Zwischen den Tragblechen 42 erstrecken sich vier Versteifungselemente 44 mit U- oder V-förmigem Querschnitt, die an die Innenseiten der Tragbleche 44 angeschweißt sind.

Die Anordnung der Versteifungselemente 44 ist derart gewählt, daß sich diametral gegenüberliegend angeordnete Versteifungselemente 44 symmetrisch zu Ebenen erstrecken, die radial durch die Welle 38 und die Eckpunkte der Tragbleche 42 verlaufen. Sich aus der Form der Versteifungselemente 44 ergebende Buchten 46 sind jeweils den Eckbereichen der Tragbleche 42 nahegelegen, während die Schenkelenden der Versteifungselemente 44 auf die Welle 38 aufgeschweißt sind. In den Buchten 46 sind vier Stangen 48 festgehalten, deren sich gegenüberliegende Enden jeweils in einer Bohrung in den Tragblechen 42 aufgenommen werden. Die Bucht 46 jedes Versteifungselementes 44 ist in gleichen Abständen mit drei Aussparungen 50 oder Ausschnitten versehen. In jede der Stangen 48 ist ein Paar Umfangsnuten 52 eingedreht, die jeweils auf halbem Weg zwischen den äußeren und der mittleren Aussparung 50 zu liegen kommen. In jede der Umfangsnuten 52 wird ein Riegel 54 oder Keil eingesetzt, der in rechteckförmigen zueinander ausgerichteten Öffnungen in den Schenkeln des ihm zugeordneten Versteifungselementes 44 gehalten wird. Ein Sicherungsstift 56 ist lösbar in einem Loch in jedem Riegel 54 gehalten, um so die Riegel 54 an Ort und Stelle festzuhalten, so daß eine Längsbewegung der Stangen 48 im Förderbetrieb unterbleibt. Auf jeder Stange 48 sind in diesem Ausführungsbeispiel drei Förderpaddel 58 schwenkbeweglich befestigt, und zwar jeweils in den betreffenden Abschnitten, die sich durch die Aussparungen 50 erstrecken. Jedes Förderpaddel 58 enthält einen inneren Träger 60, der als eine Platte mit einem inneren gebogenen Ende, das eine Hülse 62 bildet, geformt und schwenkbar auf dem ihm zugeordneten Abschnitt einer der Stangen 48 schwenkbar gehalten ist. Die Hülse 62 ist schmaler als der verbleibende Teil des Trägers 60, der sich zu einem außenliegenden und im wesentlichen rechteckförmigen Befestigungsflansch 64 im Bereich des Gehäuses 28 erweitert. Eine auswechselbare Paddelplatte 66 ist mittels einer Schrauben-, Scheiben- und Mutternverbindung 68 auf dem Träger 60 im Bereich des Befestigungsflansches 64 befestigt, wobei sich die Schrauben durch Schlitze 70 in dem Befestigungsflansch 64 erstrecken. Die Schlitze 70 bieten die Möglichkeit, die Paddelplatte 66 mit ihrer Außenkante einzustellen, um ein gewünschtes relativ geringes Spiel zwischen den Paddelplatten 66 und der Innenwandung des Zylinderabschnitts 32 des Gehäuses 28 einzustellen.

Die Stellung der Fördervorrichtung 24 in bezug auf die Zuführeinheit 22 und den Austragschacht 26 zusammen mit den geschwenkten Förderpaddeln 58 wird als eine wirksame Anordnung erachtet, um Fördergut, z. B. geschnittenes Erntegut, von der Zuführeinheit 22 ab- und einem Begleitfahrzeug zuzuführen. Insbesondere mit Blick auf die Figuren 1 und 2 erkennt man, daß Fördergut, das gerade die Zuführeinheit 22 verlassen hat, direkt in den Kreisrand des Gehäuses 28 eingespeist wird, und zwar in dessen unteren vorderen Quadranten, ungefähr tangential zu dem Außendurchmesser der Fördertrommel 36 und in der Bewegungsrichtung der Förderpaddel 58. Jedes Förderpaddel 58 sammelt das Fördergut an seinem äußeren Endbereich, wenn es dieses entlang der Umfangswand des Gehäuses 28 zu dem Austragschacht 26 bewegt und es dort gleichmäßig abgibt. Das Auftreffen bzw. der Schlag der Förderpaddel 58 gegen das zugeführte Fördergut wird im Gegensatz zu den bekannten Fördervorrichtungen verringert, weil sich die Förderpaddel 58 ungefähr in derselben Richtung wie das Fördergut bewegen, so daß die erforderliche Energie zum Fördern des Förderguts geringer ist. Zudem können die Förderpaddel 58 in Förderrichtung gesehen nach rückwärts ausweichen, um ein Einzwängen des Förderguts und somit einen höheren Energieverbrauch zu vermeiden, wenn das Fördergut entlang der Innenwand des Gehäuses 28 bewegt wird. Des weiteren wird dadurch, daß die Förderpaddel 58 ausweichen können, wenn sie eine übermäßige Menge von Fördergut zu transportieren haben, eine bessere Massenverteilung und somit eine bessere Ausbalancierung erreicht. Da hierdurch auch eine Reduzierung der Zentrifugalkraft zustande kommt, wird auch die Reibkraft des Förderguts an der Innenwandung des Gehäuses 28 reduziert. Das Ausweichen der Förderpaddel 58 nach hinten gewährleistet im übrigen, daß die Abgabe des Förderguts in den Austragschacht 26 in einheitlicher Richtung erfolgt, ohne daß das Fördergut dazu tendiert, ringsum in dem Gehäuse 28 mitgenommen zu werden. Demzufolge hat die Fördertrommel 36 eine gute Wurfweite bei reduziertem Leistungsaufwand.

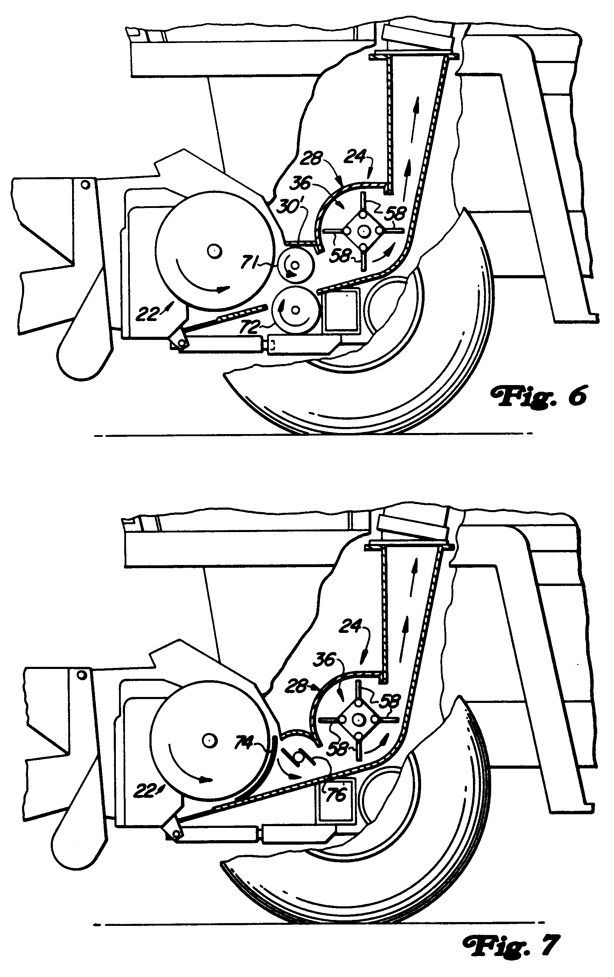

Sollte es erforderlich oder gewünscht sein, das zerkleinerte Fördergut, das die Zuführeinheit 22 verläßt, einer weiteren Behandlung zu unterwerfen, dann können gegenläufige untere und obere Brechwalzen 71, 72 in einem Einlaßbereich 30' des Gehäuses 28, wie es in Figur 6 gezeigt ist, eingebaut werden. Die Brechzone der Brechwalzen 71, 72 soll so angeordnet sein, daß sie in der tangentialen Flugbahn des Förderguts liegt, wenn es die Zuführeinheit 22 verläßt, so daß das Fördergut in das Gehäuse 28 eintritt, ohne die Flugbahn ändern zu müssen.

Falls es gewünscht ist, ein sehr feines Fördergut bzw. Erntegut zu erzeugen, kann die in Figur 7 gewählte Anordnung getroffen werden, nach der ein Nachschneidesieb 74 in der Nähe des unteren rückwärtigen Quadranten der Zuführeinheit 22 und ein Zwischenförderer 76 in dem Einlaßbereich 30″ des Gehäuses 28 angeordnet werden, wobei letzterer das Fördergut tangential in die äußere Kreisbahn der Förderpaddel 58 weiterleitet.

Daher bewahren auch die Abwandlungen gemäß den Figuren 6 und 7 den gewünschten wirkungsvollen Flug des Fördergutes ausgehend von der Zuführeinheit 22 und durch die Fördervorrichtung 24 hindurch, indem die tangentiale Flugbahn des die Zuführeinheit 22 verlassenden Förderguts beibehalten wird, so daß es der Fördertrommel 36 tangential zu den äußeren Bereichen der Förderpaddel 58 zugeführt wird.

**Patentansprüche**

1. Fördervorrichtung (24) zwischen einer Zuführeinheit (22) und einem Austragschacht (26), bestehend aus einer Fördertrommel (36) und einem teilzylindrischen Gehäuse (28), wobei die Fördertrommel (36) eine Welle (38) und Förderpaddel (58) aufweist und das Gehäuse (28) zum tangentialen Zu- und Abführen des Förderguts ausgebildet ist, dadurch gekennzeichnet, daß

     a) die Welle (38) mindestens zwei sowohl starr auf ihr befestigte wie auch sich radial von ihr erstreckende Tragbleche (42) enthält,

     b) die Tragbleche (42) mindestens zwei sich achsparallel zu der Welle (38) erstreckende Stangen (48) von einheitlichem Außendurchmesser axial beweglich aufnehmen,

c) zwischen den Tragblechen (42) Versteifungselemente (44) vorgesehen sind, die sich radial von der Welle (38) erstrecken, die an den Tragblechen (42) wie der Welle (38) befestigt sind und die an ihrem der Welle (38) abgelegenen Ende jeweils eine Stange (48) aufnehmen.

d) die Versteifungselemente (44) im Bereich der Förderpaddel (58) Aussparungen (50) aufweisen,

e) die Förderpaddel (58) auf den Stangen (48) gegenüber der Welle (38) frei pendelnd angeordnet sind und

f) die Förderpaddel (58) durch eine axiale Verschiebung der Stangen (48) außer Eingriff mit der Fördertrommel (36) bringbar sind.

2. Fördervorrichtung nach Anspruch 1, dadurch gekennzeichnet, daß die Tragbleche (42) quadratisch und von gleicher Größe sind, daß sie im Schnittpunkt ihrer Diagonalen auf der Welle (38) aufsitzen, daß ihre Eckbereiche aneinander ausgerichtet sind und daß sich zwischen jeweils zwei einander zugeordneten Eckbereichen jeweils eine Stange (48) erstreckt.

3. Fördervorrichtung nach Anspruch 1 oder 2, dadurch gekennzeichnet, daß die Versteifungselemente (44) U-oder V-förmig gebogen sind und daß deren freie Schenkelenden auf die Welle (38) aufgebracht sind, während in dem die Schenkel verbindenden Endbereich jeweils eine Stange (48) gelagert ist.

4. Fördervorrichtung nach einem oder mehreren der vorherigen Ansprüche, dadurch gekennzeichnet, daß die Stangen (48) mittels Riegeln (54) axial festgelegt werden.

5. Fördervorrichtung nach Anspruch 4, dadurch gekennzeichnet, daß die Versteifungselemente (44) zwischen jeweils zwei Förderpaddeln (58) öffnungen zur Aufnahme der Riegel (54) aufweisen.

6. Fördervorrichtung nach einem oder mehreren der vorherigen Ansprüche, dadurch gekennzeichnet, daß sich die Förderpaddel (58) aus einem schwenkbeweglich gehaltenen Träger (60) und einer Paddelplatte (66) zusammensetzen, wobei die Paddelplatte (66) in bezug auf die Welle (38) radial auf dem Träger (60) einstellbar ist.

7. Verwendung einer Fördervorrichtung nach einem oder mehreren der vorherigen Ansprüche in einem Feldhäcksler (10), bei dem die Zuführeinheit (22) von einer Häckseltrommel, Brechwalzen (71, 72) oder einem Zwischenförderer (76) gebildet wird.

## Claims

1. A conveyor device (24) between a feed unit (22) and a discharge chute (26), consisting of a conveyor drum (36) and a part-cylindrical casing (28), the conveyor drum (36) having a shaft (38) and conveyor paddles (58), and the casing (28) being designed for tangential input and extraction of the conveyed material, characterised in that

   a) the shaft (38) contains at least two carrier plates (42) rigidly attached to said shaft (38) and extending radially therefrom,

   b) the carrier plates (42) accommodate in an axially movable manner at least two rods (48) of uniform outer diameter which extend axially parallel to the shaft (38),

   c) there are provided between the carrier plates (42) stiffening members (44), which extend radially from the shaft (38) and which are attached to the carrier plates (42) and to the shaft (38), and which, at their end furthest from the shaft (38), each accommodate a rod (48).

   d) the stiffening members (44) have recesses (50) in the region of the conveyor paddles (58),

   e) the conveyor paddles (58) are disposed to swing freely on the rods (48) with respect to the shaft (38), and

   f) the conveyor paddles (58) may be disengaged from the conveyor drum (36) by an axial displacement of the rods (48).

2. A conveyor device according to Claim 1, characterised in that the carrier plates (42) are square and of equal size, in that they sit on the shaft (38) at the intersection of their diagonals, in that their corner areas are oriented towards one another, and in that a rod (48) extends in each case between each pair of associated corner areas.

3. A conveyor device according to Claim 1 or 2, characterised in that the stiffening members (44) are bent in a'U' or 'V' shape, and in that the free ends of their legs are attached on the shaft (38), while a rod (48) is mounted in each case in the terminal area connecting the legs.

4. A conveyor device according to one or more of the foregoing Claims. characterised in that the rods (48) are axially secured by means of bolts (54).

5. A conveyor device according to Claim 4, characterised in that the stiffening members (44) have openings for accommodating the bolts (54) between each two conveyor paddles (58).

6. A conveyor device according to one or more of the foregoing Claims, characterised in that the conveyor paddles (58) are assembled from a swingably secured carrier (60) and a paddle plate (66), the paddle plate (66) being adjustable radially on the carrier (60) in relation to the shaft (38).

7. Utilisation of a conveyor device according to one or more of the previous Claims in a forage harvester (10), in which the feed unit (22) is formed by a chopping drum, toothed rollers (71, 72) or an intermediate conveyor (76).

**Revendications**

1. Dispositif de transport (24) disposé entre une unité d'alimentation (22) et une cheminée de décharge (26), constitué par un tambour de transport (36) et par un carter partiellement cylindrique (28), le tambour de transport (36) comportant un arbre (38) et des palettes de transport (58), et le carter (28) étant réalisé de manière à amener et à évacuer tangentiellement la matière à transporter, caractérisé en ce que :

(a) l'arbre (38) contient au moins deux tôles de support (42), qui, à la fois sont fixées de façon rigide sur l'arbre et s'étendent radialement à partir de l'arbre,

(b) les tôles de support (42) logent au moins deux barres (48) de même diamètre extérieur, mobiles dans le sens axial et qui s'étendent parallèlement à l'axe de l'arbre (38),

(c) entre les tôles de support (42), il est prévu des éléments de renforcement (44) qui s'étendent radialement à partir de l'arbre (38), sont fixés aux tôles de support (42) de même qu'à l'arbre (38) et reçoivent chacun une barre (48) à leur extrémité située à l'opposé de l'arbre (38),

(d) les éléments de renforcement (44) possèdent des évidements (50) dans la zone des palettes de transport (58),

(e) les palettes de transport (58) sont disposées sur les barres (48) de manière à osciller librement par rapport à l'arbre (38), et

(f) les palettes de transport (58) peuvent être dégagées du tambour de transport (36) par un déplacement axial des barres (48).

2. Dispositif de transport selon la revendication 1, caractérisé en ce que les tôles de support (42) sont carrées et possèdent des dimensions identiques, en ce qu'elles prennent appui, au point d'intersection de leurs diagonales, sur l'arbre (38), en ce que leurs zones d'angle sont alignées les unes sur les autres et en ce que chacune des barres (48) s'étend respectivement entre les deux zones d'angle conjuguées.

3. Dispositif de transport selon la revendication 1 ou 2, caractérisé par le fait que les éléments de renforcement (44) sont repliés en forme d'U ou en forme de V et que les extrémités libres de leurs branches sont montées sur l'arbre (38), alors que chacune des barres (48) est montée repsectivement dans la zone d'extrémité qui relie les branches.

4. Dispositif de transport selon une ou plusieurs des revendications précédentes, caractérisé en ce que les barres (48) sont fixées axialement au moyen de verrous (54).

5. Dispositif de transport selon la revendication 4, caractérisé en ce que les éléments de renforcement (44) possèdent, entre deux palettes de transport (58) respectives, des ouvertures destinées à loger les verrous (54).

6. Dispositif de transport selon une ou plusieurs des revendications précédentes, caractérisé en ce que les palettes de transport (58) se composent d'un support (60) maintenu de manière à pouvoir pivoter, et d'une plaque porte-palettes (66), la plaque porte-palettes (66) pouvant être réglée radialement sur le support (60) par rapport à l'arbre (38).

7. Utilisation d'un dispositif de transport se on une ou plusieurs des revendications précédentes dans une ramasseuse-hacheuse (10), dans laquelle l'unité d'alimentation (22) est formée par un tambour hacheur, des cylindres briseurs (71, 72) ou un convoyeur intercalaire (76).

*Fig. 1*

*Fig. 2*

*Fig. 3*

Fig. 5

Fig. 4

Fig. 6

Fig. 7